(19) Europäisches Patentamt / European Patent Office / Office européen des brevets

(11) **EP 2 508 398 B1**

(12) **FASCICULE DE BREVET EUROPEEN**

(45) Date de publication et mention
de la délivrance du brevet:
**17.12.2014 Bulletin 2014/51**

(51) Int Cl.:
**B60T 8/17** *(2006.01)* **B60T 8/32** *(2006.01)*

(21) Numéro de dépôt: **12163041.2**

(22) Date de dépôt: **03.04.2012**

(54) **Procédé de répartition de couple de freinage entre des roues freinées portées par au moins un atterrisseur d'un aéronef**

Verfahren zur Verteilung des Bremsmoments auf die gebremsten Räder, die von mindestens einem Fahrwerk eines Luftfahrzeugs gestützt werden

Method for distributing braking torque between braked wheels supported by at least one aircraft landing gear.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2011 FR 1152944**

(43) Date de publication de la demande:
**10.10.2012 Bulletin 2012/41**

(73) Titulaire: **Messier-Bugatti-Dowty**
**78140 Vélizy-Villacoublay (FR)**

(72) Inventeur: **Thibault, Julien**
**91190 GIF-SUR-YVETTE (FR)**

(74) Mandataire: **Parzy, Benjamin Alain**
**Cabinet Boettcher**
**16, rue Médéric**
**75017 Paris (FR)**

(56) Documents cités:
**EP-A1- 1 712 441    FR-A1- 2 898 333**
**FR-A1- 2 918 637**

**Description**

L'invention concerne un procédé de répartition de couple de freinage entre des roues freinées portées par au moins un atterrisseur d'un aéronef.

ARRIERE-PLAN TECHNOLOGIQUE DE L'INVENTION

Sur certains aéronefs, et malgré l'application de consigne de freinage identiques, une répartition hétérogène de l'énergie de freinage dissipée par les freins peut être observé, conduisant à des échauffements et à des usures des piles de disques hétérogènes.

Un procédé de répartition de l'énergie du freinage pour aeroneuf est connu du document FR 2 898 333 A1.

Par ailleurs, certains freins peuvent atteindre ou dépasser un seuil de température critique contraignant la compagnie aérienne exploitant l'aéronef à attendre que ces freins soient descendus en température avant de pouvoir entamer une nouvelle rotation. Ce temps d'attente représente un manque à gagner pour la compagnie.

OBJET DE L'INVENTION

L'invention vise à proposer un procédé de répartition de l'énergie de freinage entre les freins, permettant d'éviter au maximum les échauffements importants de certains freins.

DESCRIPTION DE L'INVENTION

A cet effet, on propose un procédé de répartition de l'énergie d'un freinage à venir entre des roues freinées numérotées 1...p et portées par N atterrisseurs d'un aéronef, chacune des roues freinées comportant un frein muni d'une pile de disques sur laquelle un effort est sélectivement appliqué pour générer un couple de freinage de la roue, chaque frein étant équipé de moyens pour mesurer une épaisseur de la pile de disque, et dans lequel

- on assigne comme consigne individuelle de freinage à générer par le frein j la consigne

$$C_j = \frac{E_j}{E_1 + \ldots + E_p} . N . C$$

Où, C est la consigne générale de freinage à développer par les roues freinées de l'un des atterrisseurs, $E_j$ est l'épaisseur de la pile de disques du frein de la roue j, et $C_j$ la consigne individuelle de freinage pour la roue j ;

- on commande chaque frein j selon la consigne individuelle de freinage $C_j$ ainsi déterminée.

Ainsi, on répartit en fonction des épaisseurs des piles de disques de chacun des freins la consigne générale de couple à développer par les roues concernées. Cette consigne générale de freinage est générée par exemple par un calculateur de freinage. Ainsi, si la pile de disques de l'un des freins est plus usée que les autres, son épaisseur sera moindre, et donc la consigne de couple sera diminuée en conséquence.

Or l'on sait que l'énergie à dissiper par chaque frein est proportionnelle au couple développé par ce frein lors du freinage, tandis que l'échauffement de la pile de disques correspondante est quant à elle proportionnelle à la masse de la matière constituant les disques, et donc à son épaisseur. En rendant selon l'invention le couple à développer proportionnel à cette épaisseur, on s'assure donc que la pile de disques correspondante s'échauffera de la même façon que les autres piles de disques.

Ce procédé est facilement mis en oeuvre sur un aéronef équipé de freins électromécaniques, puisqu'il suffit d'utiliser les actionneurs électromécaniques de freinage pour effectuer une mesure de l'épaisseur des piles de disques. A cet effet, il suffit, par exemple en vol avant d'atterrir, de faire venir au contact des disques le poussoir de l'un des actionneurs électromécaniques. On relève alors la position du poussoir, et on en déduit l'épaisseur résiduelle de la pile de disques. On effectue cette mesure pour chacune des piles de disques des freins concerné par la répartition, et on en déduit pour chacun des freins le coefficient de répartition correspondant, à savoir, pour le frein j :

$$\frac{E_j}{E_1 + \ldots + E_p}$$

EXEMPLES DE MISE EN OEUVRE

Pour un aéronef comportant deux atterrisseurs principaux dont un atterrisseur gauche et un atterrisseur droit, comportant chacun deux roues freinées (respectivement 1 et 2 pour l'atterrisseur gauche et 3 et 4 pour l'atterrisseur droit), on aura respectivement:

$$C_1 = \frac{E_1}{E_1 + E_2} \cdot C_g$$

$$C_2 = \frac{E_2}{E_1 + E_2} \cdot C_g$$

pour l'atterrisseur gauche, et

$$C_3 = \frac{E_3}{E_3 + E_4} \cdot C_d$$

$$C_4 = \frac{E_4}{E_3 + E_4} \cdot C_d$$

pour l'atterrisseur droit, où Cg et $C_d$ sont les consignes générales de freinage assignées respectivement à l'atterrisseur gauche et l'atterrisseur droit. Bien sûr, on constate que $C_1+C_2=C_g$ et $C_3+C_4=C_d$. On choisit donc ici d'appliquer le procédé de l'invention atterrisseur par atterrisseur (N=1).

Cette répartition est bien adaptée lorsque les consignes générales de freinage Cg et Cd sont susceptibles d'être différentes, par exemple lors d'un freinage différentiel, soit demandé par le pilote par un appui différentiel sur les pédales de frein, soit demandé par le calculateur de freinage pour aider l'aéronef à tourner lors d'un déplacement de celui-ci sur la piste, ou au contraire pour contrer une tendance de l'aéronef à virer, si l'on veut que celui-ci se déplacement selon une trajectoire rectiligne.

Selon maintenant une variante du procédé de répartition de freinage de l'invention, on tient compte des épaisseurs des piles de disques des freins portés par plusieurs atterrisseurs.

Cette variante du procédé est adaptée dans des cas (par exemple en mode AUTOBRAKE) pour lesquels la consigne générale de freinage est identique pour les atterrisseurs concernés. En notant C cette consigne générale de freinage pour chacun des atterrisseurs, et en reprenant l'exemple précédent, la répartition se fait alors comme suit :

$$C_1 = \frac{E_1}{E_1 + E_2 + E_3 + E_4} \cdot 2C$$

$$C_2 = \frac{E_2}{E_1 + E_2 + E_3 + E_4} \cdot 2C$$

$$C_3 = \frac{E_3}{E_1 + E_2 + E_3 + E_4} \cdot 2C$$

$$C_4 = \frac{E_4}{E_1 + E_2 + E_3 + E_4} \cdot 2C$$

Comme auparavant, on a $C_1+C_2+C_3+C_4=2 \cdot C$, où 2C représente la consigne générale de freinage à appliquer par l'ensemble des roues concernées. La répartition de freinage sur l'ensemble des roues freinées de l'aéronef permet alors d'homogénéiser encore plus l'échauffement des freins.

Cette répétition se généralise facilement à N atterrisseurs, les roues de chacun des atterrisseurs devant collectivement développer un freinage égal à la consigne générale de freinage C :

$$C_j = \frac{E_j}{E_1 + \dots E_p} . N.C$$

Où p est le nombre total de roues freinées portées par les N atterrisseurs concernés.

Selon un mode particulier de mise en oeuvre du procédé de l'invention, les consignes individuelles de freinage ainsi calculées sont corrigées pour tenir compte d'une température initiale de la pile de disque du frein correspondant. Ainsi, si l'un des freins a une pile de disques qui est plus chaude que les autres, on fera en sorte de diminuer la consigne individuelle de freinage correspondante, afin de diminuer l'échauffement à venir sur ce frein. Bien sûr, la portion du freinage non réalisée par ce frein devra être développée par les autres freins.

Un exemple de mise en oeuvre de cette correction est maintenant détaillé. Reprenant l'exemple précité, on note $T_1$ et $T_2$ les températures initiales des piles de disques des freins 1 et 2, $T_m = \frac{1}{2}(T_1 + T_2)$ la température moyenne de ces piles de disques servant ici de température de référence et $\Delta = T_1 - T_2$ l'écart de température, on aura :

$$C_1 = \left( \frac{E_1}{E_1 + E_2} + k_1 \right) \cdot C_g$$

$$C_2 = \left( \frac{E_2}{E_1 + E_2} + k_2 \right) \cdot C_g$$

où

$$k_1 = \frac{-\Delta}{T_m} \quad \text{et} \quad k_2 = \frac{\Delta}{T_m} \; .$$

Cet exemple se généralise facilement à N atterrisseurs, les roues de chacun des atterrisseurs devant collectivement développer un freinage égal à la consigne générale de freinage C :

$$C_j = \left( \frac{E_j}{E_1 + ...E_p} + k_j \right) N.C$$

Où le coefficient correcteur $k_j$ est égal à

$$k_j = \frac{-1}{T_m} \left( T_j - T_{réfj} \right)$$

Avec

$$T_m = \frac{1}{p} \sum_{i=1}^{p} T_i \quad \text{et} \quad T_{réfj} = \frac{1}{P-1} \sum_{i \neq j} T_i$$

Ou, ce qui revient au même, on corrige la consigne individuelle de freinage $C_j$ par une correction de couple $\Delta C_j$ égale à

$$\Delta C_j = k_j.N.C$$

la correction de couple tenant compte de la température initiale $T_j$ du frein j.

Ainsi, on compare la température $T_j$ à une température de référence $T_{réfj}$ égale à la moyenne des températures des autres freins. Si la température $T_j$ est plus élevée que cette température de référence, la correction $\Delta C_j$ est négative, ce qui a pour effet de diminuer la consigne individuelle de freinage $C_j$.

La correction n'est bien sûr pas limitée à l'exemple décrit ci-dessus. D'une façon générale, la correction sera dépendante de la température initiale de la pile de disques avant application du freinage, en étant adaptée à diminuer la consigne individuelle de freinage pour une pile de disques ayant une température initiale plus élevée qu'une température de référence.

De préférence, la correction de couple est bornée, pour éviter un différentiel de consigne individuelle de freinage trop important entre deux roues. La partie d'énergie non dissipée par un frein en raison de la diminution de sa consigne individuelle de freinage devra bien sûr être dissipée par les autres freins concernés, ce qui impose en pratique d'augmenter la consigne individuelle de freinage d'au moins l'un des autres freins.

L'invention est bien sûr applicable à un aéronef muni d'un système de freinage hydraulique. Cependant, il conviendra d'équiper les freins de capteurs de mesure générant un signal pouvant être utilisé pour estimer l'épaisseur de la pile de disques.

Par consigne de freinage, on entend toute consigne représentative d'un effort de freinage à appliquer sur la pile de disques d'un frein donné, ou d'un couple de freinage à développer par ledit frein. Cependant, le procédé de l'invention est plus efficace si les consignes sont des consignes de couple. Cela suppose alors que les freins sont équipés de moyens de mesure du couple, ou à tout le moins de moyens d'estimation de celui-ci.

## Revendications

1. Procédé de répartition de l'énergie de freinage entre un groupe des roues freinées numérotées 1...p et portées par N atterrisseurs d'un aéronef, chacune des roues freinées comportant un frein muni d'une pile de disques sur laquelle un effort est sélectivement appliqué pour générer un couple de freinage de la roue, **caractérisé en ce que** chaque frein est équipé de moyens pour mesurer une épaisseur de la pile de disques, et dans lequel :

   - on assigne comme consigne individuelle de freinage à générer par le frein j la consigne

$$C_j = \frac{E_j}{E_1 + ... + E_p} .N.C$$

   Où p est le nombre de roues concernées, C est la consigne générale de freinage à développer par les roues freinées d'un même atterrisseur, $E_j$ est l'épaisseur de la pile de disques du frein de la roue j, et $C_j$ la consigne individuelle de freinage pour la roue j ;
   - on commande chaque frein selon la consigne individuelle de freinage ainsi déterminée.

2. Procédé selon la revendication 1, dans lequel les roues sont toutes portées par le même atterrisseur (N=1).

3. Procédé selon la revendication 1, dans lequel, pour au moins un des freins, on corrige la consigne individuelle de freinage $C_j$ à l'aide d'une correction de couple ($\Delta C_j$) dépendant d'une température initiale ($T_j$) de la pile de disques avant application du freinage, de sorte que la consigne individuelle de freinage dudit frein est diminuée si la température initiale de celui-ci ($C_j$) est plus élevée qu'une température de référence.

4. Procédé selon la revendication 3, dans lequel la température de référence est la moyenne des températures des autres freins.

**5.** Procédé selon la revendication 4, dans lequel la correction de couple ($\Delta C_j$) est égale à $C_j = k_j.N.C$, où

$$k_j = \frac{-1}{T_m}\left(T_j - T_{r\acute{e}fj}\right) \quad \text{avec} \quad T_m = \frac{1}{p}\sum_{i=1}^{p} T_i \quad \text{et}$$

$$T_{r\acute{e}fj} = \frac{1}{P-1}\sum_{i\neq j} T_i \,.$$

**6.** Procédé selon l'une des revendications précédentes, dans lequel la correction de couple est bornée.

**7.** Procédé selon l'une des revendications précédentes, dans lequel la consigne générale de freinage est une consigne de couple de freinage.

**Patentansprüche**

**1.** Verfahren zum Verteilen der Bremsenergie unter einer Gruppe von gebremsten Rädern, die mit 1...p nummeriert sind und von N Fahrwerken eines Flugzeugs getragen werden, wobei jedes der gebremsten Räder eine Bremse umfasst, die mit einem Stapel von Scheiben versehen ist, auf den selektiv eine Kraft aufgebracht wird, um ein Bremsmoment des Rades zu erzeugen, **dadurch gekennzeichnet, dass** jede Bremse mit Mitteln zum Messen einer Dicke des Stapels von Scheiben ausgestattet ist, und wobei:

- man als Einzel-Bremssollwert, der von der Bremse j zu erzeugen ist, den Sollwert

$$C_j = \frac{E_j}{E_1 + ... + E_p}.N.C$$

festlegt, wobei p die Anzahl an betreffenden Rädern, C der von den gebremsten Rädern ein und desselben Fahrwerks zu entwickelnde Gesamt-Bremssollwert, $E_j$ die Dicke des Stapels von Scheiben der Bremse des Rades j und $C_j$ der Einzel-Bremssollwert für das Rad j ist, und
- man jede Bremse entsprechend dem so bestimmten Einzel-Bremssollwert steuert.

**2.** Verfahren nach Anspruch 1, wobei die Räder alle von demselben Fahrwerk (N=1) getragen werden.

**3.** Verfahren nach Anspruch 1, wobei man für mindestens eine der Bremsen den Einzel-Bremssollwert $C_j$ mit Hilfe einer Drehmomentkorrektur ($\Delta C_j$) korrigiert, die von einer Anfangstemperatur ($T_j$) des Stapels von Scheiben vor Anwendung der Bremse abhängt, derart, dass der Einzel-Bremssollwert der Bremse herabgesetzt wird, wenn die Anfangstemperatur

derselben ($C_j$) höher als eine Bezugstemperatur ist.

**4.** Verfahren nach Anspruch 3, wobei die Bezugstemperatur der Mittelwert der Temperaturen der anderen Bremsen ist.

**5.** Verfahren nach Anspruch 4, wobei die Drehmomentkorrektur ($\Delta C_j$) gleich $C_j = k_j.N.C$ ist, wobei

$$k_j = \frac{-1}{T_m}(T_j - T_{r\acute{e}fj}) \quad \text{mit} \quad T_m = \frac{1}{p}\sum_{i=1}^{p} T_i \quad \text{und}$$

$$T_{r\acute{e}fj} = \frac{1}{P-1}\sum_{i\neq j} T_i\,.$$

**6.** Verfahren nach einem der vorhergehenden Ansprüche, wobei die Drehmomentkorrektur begrenzt ist.

**7.** Verfahren nach einem der vorhergehenden Ansprüche, wobei der Gesamt-Bremssollwert ein Bremsmomentsollwert ist.

**Claims**

**1.** Method for distributing braking energy between a group of the braked wheels numbered 1...p and fitted to N undercarriages of an aircraft, each of the braked wheels comprising a brake furnished with a stack of discs to which a load is selectively applied so as to generate a torque for braking the wheel, each brake being equipped with means for measuring a thickness of the stack of discs, and in which:

- the setting

$$C_j = \frac{E_j}{E_1 + ... + E_p}.N.C$$

is assigned as individual setting of braking to be generated by brake j
where p is the number of wheels concerned, C is the general setting of braking to be developed by the braked wheels of one and the same undercarriage, $E_j$ is the thickness of the stack of discs of the brake of wheel j, and $C_j$ the individual braking setting for wheel j;
- each brake is controlled according to the individual braking setting thus determined.

**2.** Method according to Claim 1, in which the wheels are all fitted to the same undercarriage (N=1).

**3.** Method according to Claim 1, in which, for at least one of the brakes, the individual braking setting $C_j$

is corrected with the aid of a torque correction ($\Delta C_j$) dependent on an initial temperature ($T_j$) of the stack of discs before braking is applied, so that the individual braking setting of the said brake is decreased if the initial temperature of the latter ($C_j$) is higher than a reference temperature.

4. Method according to Claim 3, in which the reference temperature is the mean of the temperatures of the other brakes.

5. Method according to Claim 4, in which the torque correction ($\Delta C_j$) is equal to $C_j = k_j.N.C$, where

$$k_j = \frac{-1}{T_m}\left(T_j - T_{refj}\right) \quad \text{with} \quad T_m = \frac{1}{p}\sum_{i=1}^{p} T_i \quad \text{and}$$

$$T_{refj} = \frac{1}{P-1}\sum_{i \neq j} T_i .$$

6. Method according to one of the preceding claims, in which the torque correction is bounded.

7. Method according to one of the preceding claims, in which the general braking setting is a braking torque setting.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2898333 A1